# EUROPEAN PATENT APPLICATION

(11) **EP 2 570 213 A1**
(43) Date of publication of application: **20.03.2013**
(21) Application number: 11193296.8
(22) Date of filing: 13.12.2011
(51) Int. Cl.: B23B 31/02, B23B 31/107, B23B 31/117, B23Q 11/10

(54) **Tool holder**

(30) Priority: 16.09.2011 JP 2011203153
(71) Applicant: NIKKEN KOSAKUSHO WORKS LTD., Daito-shi Osaka 574-0023 (JP)
(72) Inventor: Nakai, Eisaku, Osaka, 574-0023 (JP); Maemura, Suguru, Osaka, 574-0023 (JP); Mikado, Susumu, Osaka, 574-0023 (JP)
(74) Representative: Kirschner, Klaus Dieter

(57) **Abstract**

A tool holder, which is inserted into a center-through-coolant spindle and employs a side-lock type chuck structure, can reliably prevent leakage of cutting liquid from a bolt hole for a side-lock bolt. The tool holder (10) includes a side-lock bolt (23) and an annular seal member (24). The side-lock bolt (23) is inserted into a through hole (22) extending from an outer peripheral surface (12b) to an inner peripheral surface (12h) of a tool attachment portion (12), threadedly engaged with an internal thread (22s) formed in the through hole (22), and secures a shank (Ts) of a tool (T1) to a tool-holding bore (122). The seal member (24) seals between the through hole (22) and side-lock bolt (23).

## Description

The present invention relates to a tool holder whose axial rear area is inserted into a spindle of a machine tool and whose axial front area chucks a tool, such as an endmill and a reamer.

When a tool, such as an endmill and reamer, is chucked by a tool holder, a shank formed on the rear end side of the tool is inserted into a tool-holding bore formed at a front end of a tool holder and is then secured in the tool-holding bore with bolts, nuts or the like provided on the tool holder so that the shank does not move in an axial direction and does not rotate relative to the tool-holding bore. A known conventional method of securing the shank is a side lock method as disclosed in, for example, Japanese Unexamined Patent Application Publication Nos. 2002-346864 and 2001-87969 and FIGS. 1 to 3 in Japanese Unexamined Utility Model Application Publication No. 1994-80509. In the side-lock type chucking, a bolt hole is formed in a chuck tube in a radial direction to connect an outer peripheral surface and an inner peripheral surface (tool-holding bore) of the chuck tube. A side-lock bolt is screwed into the bolt hole from the outer peripheral surface of the chuck tube so that the forward end of the side-lock bolt sticks out from the inner peripheral surface of the chuck tube to make contact with a flat portion formed on the outer peripheral surface of the shank.

The above-mentioned side-lock type tool holders have the following problems. When a liquid, such as cutting liquid or cleaning liquid, is supplied from a center-through-coolant spindle of a machine tool to a tool-holding bore of a tool holder to spray the cutting liquid or cleaning liquid to a workpiece to be machined by the tool, the cutting liquid or cleaning liquid inevitably leaks from the bolt hole, which is formed to connect the outer peripheral surface of the tool holder and the tool holding bore, toward the outer peripheral surface of the tool holder. Even if the side-lock bolt is screwed in the bolt hole, the liquid leaks from a gap between the bolt hole and the side-lock bolt screwed therein. Especially when a huge amount of liquid is injected at high pressure to increase productivity, a considerably large amount of the liquid will be leaked from the bolt hole.

The present invention has been made in view of the aforementioned circumstances and has an object to provide a side-lock type tool holder capable of reliably preventing liquid leakage from the bolt hole.

To achieve the object, the tool holder according to the present invention includes a holder body having a cylindrical tool attachment portion that has at its center a tool-holding bore extending from an axial forward end toward an axial rearward end and is formed in an axial forward end area of the holder body, a mounting portion that is provided in an axial rearward end area of the holder body and formed in a shape to fit to a center-through-coolant spindle of a machine tool, and a liquid passage that connects the mounting portion and the tool-holding bore to supply liquid flowing from the center-through-coolant spindle to the tool-holding bore; a side-lock bolt that is inserted into a through hole passing through from an outer peripheral surface to an inner peripheral surface of the tool attachment portion, engages with an internal thread formed in the through hole, and secures a shank of a tool inserted into the tool-holding bore; and an annular seal member that seals between the through hole and the side-lock bolt.

According to the present invention, the annular seal member that seals between the peripheral wall of the through hole and the outer peripheral surface of the side-lock bolt can reliably prevent cutting liquid or cleaning liquid from leaking from the through hole, or equivalently, a bolt hole for the side-lock bolt.

The seal member may be an O ring or a ring with other cross-sectional shapes. The seal member can be disposed anywhere in the through hole; however, in a preferred embodiment, the through hole may have an internal thread that is formed in an area thereof near the tool-holding bore and engages with an external thread of the side-lock bolt, the through hole may have a portion that is positioned away from the tool-holding bore and has a diameter greater than the internal thread to receive a head of the side-lock bolt, and the seal member may be disposed in an annular gap between the outer peripheral surface of the head of the side-lock bolt and the large-diameter portion of the through hole.

In one embodiment, the tool holder further includes a detachment prevention member that is provided in the through hole to prevent the side-lock bolt from falling outward. According to the embodiment, the side-lock bolt does not come off out of the through hole in the radial direction even if the side-lock bolt is loosened by centrifugal force during high-speed rotating operation of the tool holder. The detachment prevention member can be disposed anywhere without specific limitation; however, it is preferable to dispose the detachment prevention member, in the through hole, in an area near the outer peripheral surface of the tool attachment portion.

In a preferred embodiment, retraction of the side-lock bolt from the tool-holding bore may be completed when the side-lock bolt is moved to a position to abut against the detachment prevention member. According to the embodiment, a cylindrical shank without a cut-away portion against which the side-lock bolt abuts can be inserted into the through hole.

Forming a through hole in the holder body lightens the holder body by a void provided in the through hole and causes a mass imbalance of the holder body about the axis. In other words, the center of mass of the holder body deviates from the axis, which may cause misalignment of the axial forward end of the tool from the center of rotation of the tool holder rotating at a high speed. The same problem may occur with radial displacement of the side-lock bolt.

To solve the problem, in a preferred embodiment, a mass control portion that keeps mass about an axis of the holder body and side-lock bolt in balance may be provided to the holder body with the shank of the tool in the tool-holding bore secured with the side-lock bolt. According to the embodiment, the center of mass of the assembly, composed of the side-lock bolt that is turned in the loosening direction until the shank of the tool is secured and the holder body with the through hole, can be aligned or closely aligned to the axis. Accordingly, the tool with the forward end aligned to the rotational axis can work on a workpiece with high precision. The mass control portion is a component or shape, such as a recessed portion, designed to increase or decrease the mass and may be provided at a position radially different from the through hole. More specifically, a mass control portion is provided at a position radially 180° opposite to the through hole. Alternatively, a plurality of mass control portions are provided at radially different positions.

By the way, in aviation industries, a workpiece made of difficult-to-machine materials, such as titanium and Inconel (registered trademark), is subjected to cutting work with a cutting tool and a large amount of cutting liquid injected to the workpiece. It is desired to hold the cutting tool with high precision so that long-time cutting operations for such a difficult-to-machine workpiece do not loosen the cutting tool.

To achieve precise holding of a tool, a preferred embodiment is configured as follows. The outer peripheral surface of the tool attachment portion is tapered toward the axial forward end. On the outer peripheral surface of the tool attachment portion provided are a cylindrical clamp member that has an inner peripheral surface tapered at the same angle as the outer peripheral surface of the tool attachment portion and encompasses the outer peripheral surface of the tool attachment portion on the axial forward end side that is further forward than the side-lock bolt, a plurality of needle rollers disposed in an annular space between the inner peripheral surface of the clamp member and the outer peripheral surface the tool attachment portion, and a retainer that holds the needle rollers so that the needle rollers incline at a predetermined angle in a circumferential direction with respect to the axis. The clamp member is rotated to rotate the needle rollers and revolve the needle rollers in a spiral to contract the diameter of the tool-holding bore formed in the tool attachment portion or expand the tool-holding bore to its original diameter. According to the embodiment, rotating the clamp member rotates the needle rollers and revolves the needle rollers in a spiral to contract the diameter of the tool-holding bore formed in the tool attachment portion or expand the tool-holding bore to its original diameter, and therefore the axial forward area of the tool attachment portion tightly and firmly holds the entire outer peripheral surface of the shank of the cutting tool. Accordingly, the cutting tool can be held by the tool holder with high precision. In addition, the side-lock bolt provided on the tool holder to secure the shank of the cutting tool locks the shank of the cutting tool from rotating, and therefore even long-time cutting operations do not loosen the cutting tool.

Rotating the side-lock bolt in the tightening direction moves the forward end of the side-lock bolt into the tool-holding bore and makes surface contact with an abutment flat surface formed on a part of the shank of the tool to secure the tool. Rotating the side-lock bolt in the loosening direction moves the forward end of the side-lock bolt back from the tool-holding bore. When the embodiment provided with the clamp member further includes a detachment prevention member that prevents the side-lock bolt from coming off outward, rotating the side-lock bolt in the loosening direction preferably causes the rearward end of the side-lock bolt to abut against the detachment prevention member and to retract the forward end of the side-lock bolt from the tool-holding bore. According to the embodiment, even if the shank is in the shape of a cylinder without an abutment flat surface, the tool-holding bore can receive the shank at its bottom and the clamp member can hold the cylindrical shank with high precision.

The clamp member rotates on the outer peripheral surface of the tool attachment portion to move in the axis direction. If the annular space between the inner peripheral surface of the clamp member and the outer peripheral surface of the tool attachment portion opens at axially opposite ends, foreign matter enters from the openings at the opposite ends. To prevent this, it is preferable to close the openings at opposite ends of the annular space with a covering member or the like. In a preferred embodiment, the holder body may include, on an outer peripheral surface thereof, an annular step surface that faces an axial rearward end surface of the clamp member and restricts the axial rearward movement of the clamp member, and the tool holder further comprises an annular seal member interposed between the axial rearward end surface of the clamp member and the annular step surface of the holder body. According to the embodiment, rotating the clamp member in the tightening direction moves the clamp member toward the axial rearward end until reaching the proximity of the annular step surface. The annular seal member interposed between the axial rearward end of the clamp member and the annular step surface can seal the axial rearward end opening of the annular space between the inner peripheral surface of the clamp member and the outer peripheral surface of the tool attachment portion.

An embodiment for sealing the axial forward end opening of the annular space between the inner peripheral surface of the clamp member and the outer peripheral surface of the tool attachment portion includes an annular covering member that is attached to the axial forward end of the tool attachment portion to cover the axial forward end opening of the annular space and further includes an annular outer seal member that seals between the covering member and clamp member. According to the embodiment, the covering member and seal member can reliably prevent entry of foreign matter, such as airborne chips from the workpiece, into the axial forward end opening of the annular space. The outer seal member can be provided to the clamp member; however, it is more preferable to provide it to the covering member.

In an embodiment for injecting cutting liquid or cleaning liquid from the tool attachment portion to a workpiece, a linear groove is formed on the inner peripheral surface of the tool attachment portion from an axial forward end surface toward an axial rearward end of the tool attachment portion and an injection port is formed at an inner peripheral edge of the covering member, the injection port extending from a forward end surface to a rearward end surface of the covering member to connect with the linear groove. According to the embodiment, the cutting liquid can flow along the groove formed on the inner peripheral surface of the tool attachment portion and can be suitably injected from the tool attachment portion toward the axial forward end. The injection port is not limited to a specific shape, but can be any form, e.g., cut-away portion, groove, and small hole, as long as it is formed on the inner peripheral edge of the covering member.

To inject cutting liquid or cleaning liquid flowing through a tool from a forward tip of the tool to a workpiece, but not from a tool attachment portion, another embodiment may further include an annular inner seal member that seals between the inner peripheral edge of the covering member and the outer peripheral surface of the shank of the tool inserted in the tool-holding bore. According to the embodiment, the cutting liquid or cleaning liquid will not leak from where the shank of the tool is chucked by the tool attachment portion.

In tool chucking operations, a shank of a tool is inserted to a predetermined axial position in a tool-holding bore. In a preferred embodiment, the tool holder further includes a stopper member that is fixedly attached to the bottom of the tool-holding bore to define the axial position of the shank of the tool inserted in the tool-holding bore. According to the embodiment, the tool-holding bore can receive a preferable length of the shank of the tool, thereby improving chucking operation efficiency.

In a preferred embodiment, the stopper member includes a stationary member fixedly attached to the inner peripheral surface of the tool attachment portion and an adjusting member movably supported in the axial direction by the stationary member and abutting against the shank of the tool. According to the embodiment, even if a tool is replaced with another tool having a shank of a different length and the new tool is chucked, the shank can be inserted into the tool-holding bore by a preferable length, thereby improving chucking operation efficiency. For example, the stationary member includes an internal thread portion extending in the axial direction, and the adjusting member includes an external thread portion threadedly engaging with the internal thread portion. Rotating the adjusting member adjusts the axial position of the adjusting member.

To feed cutting liquid or cleaning liquid into a tool, it is preferable to reliably connect a liquid passage in the holder body and a liquid passage in the tool. In an embodiment for this issue, the liquid passage extends from the mounting portion of the holder body to the bottom of the tool-holding bore. The stationary member includes a first annular seal member that seals between an outer peripheral surface of the stationary member and the inner peripheral surface of the tool attachment portion. The adjusting member is fixedly attached to a bore passing through the stationary member in the axial direction and includes a second annular seal member that seals between a circumference wall of the bore in the stationary member and the adjusting member, a communication passage connecting the bottom of the tool-holding bore and an opening of the tool-holding bore, and a third annular seal member that seals between an axial forward end surface of the adjusting member abutting against the shank of the tool and the shank of the tool. According to the embodiment, the communication passage formed in the adjusting member to establish a communication between the bottom of the tool-holding bore and the opening of the tool-holding bore can reliably connect the liquid passage of the holder body and the liquid passage in the tool. In addition, the first to third seal members can prevent the flow of the cutting liquid toward the through hole.

As described above, the present invention can reliably prevent leakage of cutting liquid or cleaning liquid from a bolt hole for the side-lock bolt, and therefore can appropriately inject the cutting liquid to a workpiece during a cutting operation of the workpiece by using a cutting tool.

An embodiment of the present invention will be described in detail with reference to an exemplary tool holder shown in the drawings.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings
- Fig. 1: is an overall view of a tool holder according to an embodiment of the present invention;
- Fig. 2: is a front view of an axial forward end of the embodiment;
- Fig. 3: is a front view of the axial forward end of the embodiment with a covering member removed therefrom;
- Fig. 4: is an overall view for showing a linear groove formed on an inner peripheral surface of the tool attachment portion according to the embodiment;
- Fig. 5: is an overall view of the tool holder, before chucking a shank of a tool, according to the embodiment;
- Fig. 6: is an overall view of a tool holder according to another embodiment of the present invention; and
- Fig. 7: is a longitudinal cross-sectional view of a side-lock type chuck structure according to a modification of the present invention.

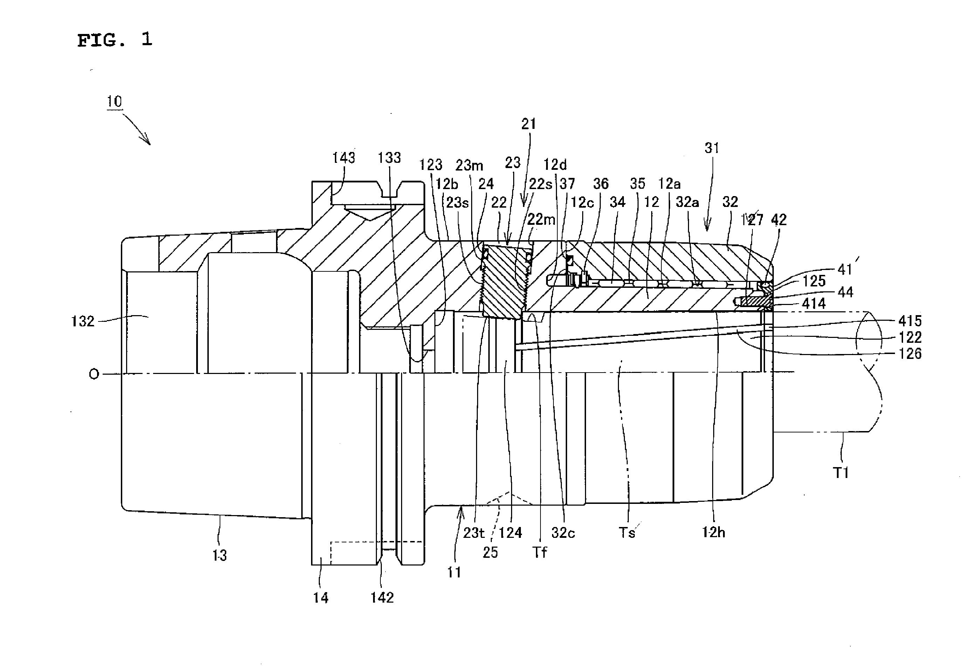

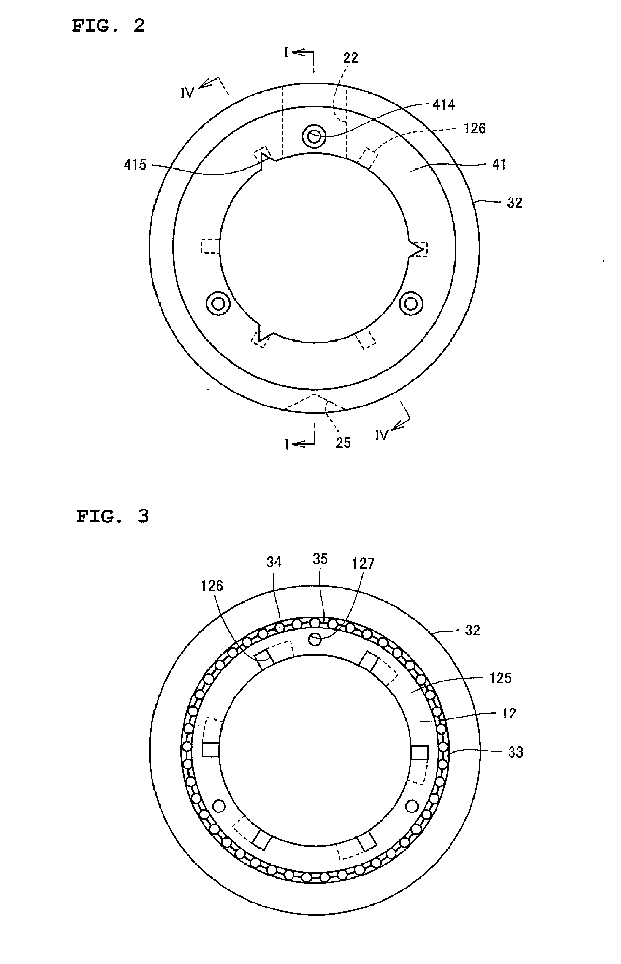

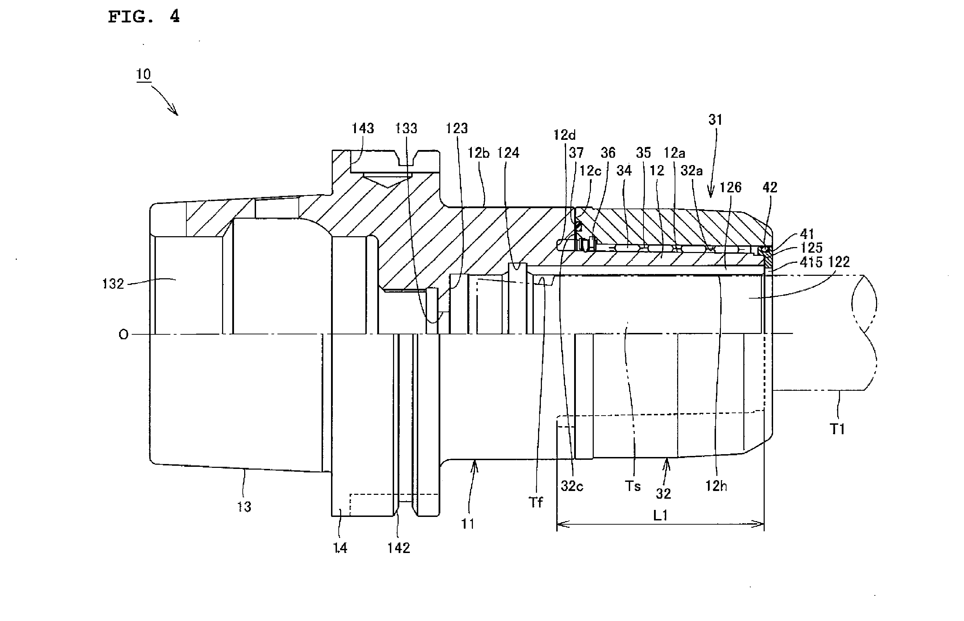

Fig. 1 is an overall view of the tool holder according to the embodiment of the present invention. Fig. 2 is a front view of an axial forward end of the tool holder. Fig. 3 is a front view of the axial forward end of the tool holder with a covering member removed therefrom. Fig. 4 is an overall view for showing a linear groove formed on the inner peripheral surface of the tool attachment portion according to the embodiment. In FIGS. 1 and 4, the upper half of the tool holder is depicted as a longitudinal cross-sectional view, while the lower half is depicted as a side view. The cross section of Fig. 1 and the cross section of Fig. 4 are taken along dashed dotted lines shown in Fig. 2, respectively.

A tool holder 10 mainly includes a holder body 11, a side-lock bolt 23 and a clamp member 32.

The holder body 11 is a metal holder body extending along an axis O indicated by a dashed dotted line and has a tool attachment portion 12 for chucking a tool T1, such as a cutter, in its axial forward end area and a mounting portion 13, which is to be mounted on a spindle of a machine tool, in its axial rearward end area. In the axial middle part of the holder body, a large-diameter flange portion 14 is formed so as to expand more radially outward than the tool attachment portion 12 and mounting portion 13. At the outer peripheral edge of the flange portion 14 formed are a V-shaped groove 142 running along a circumferential direction. In addition, a drive-key groove 143 extends in the axial direction at the outer peripheral edge of the flange portion 14.

The mounting portion 13 is generally shaped to fit to a spindle of a machine tool (not shown). In this embodiment, the mounting portion 13 has an outer peripheral surface tapering toward the axial rearward end and a center bore 132 extending along the axis O. The center bore 132 runs from the axial rearward end toward the axial forward end of the holder body 11, changes its diameter at some midpoints to have a few diameters in the axial direction, and ultimately becomes a small center bore 133 with a small diameter at the foremost end of the center bore 132. A member on the spindle side (not shown) engages with the axial rearward end of the center bore 132 to pull back the mounting portion 13, thereby securely mounting the mounting portion 13 on the center-through-coolant spindle of the machine tool. Cutting liquid or cleaning liquid flows from the center-through-coolant spindle into the center bore 132. In other words, the center bore 132 functions as a liquid passage.

The tool attachment portion 12 is in a cylindrical shape with an opening at the axial forward end thereof and has an outer peripheral surface and an inner peripheral surface. The inner peripheral surface 12h defines a tool-holding bore 122 extending from the axial forward end and axial rearward end along the axis O. The tool-holding bore 122 has a constant diameter and a bottom 123, and is connected to the small center bore 133 made in the bottom 123 to thereby feed the cutting liquid from the center bore 132 to the bottom of the tool-holding bore 122.

As shown in Fig. 1, a circumferential groove 124 is formed on the inner peripheral surface 12h of the tool attachment portion 12. As shown in Fig. 4, linear grooves 126 are formed on the inner peripheral surface 12h of the tool attachment portion 12. The linear grooves 126 extend from an axial forward end surface 125 of the tool attachment portion 12 toward the axial rearward end and connects with the circumferential groove 124. The cutting liquid having entered the bottom of the tool-holding bore 122 from the small center bore 133 flows along the linear grooves 126 via the circumferential groove 124 toward the axial forward end surface 125.

The linear grooves 126 are not in parallel with the axis O, but incline in a circumferential direction as indicated by solid lines in Fig. 1 and by dashed lines in Fig. 3. For convenience of explanation, Fig. 4 depicts the entire length of one of the linear grooves 126 and omits the other linear grooves 126.

The axial forward end surface 125 is to be covered with a covering member 41. As shown in Fig. 2, the covering member 41 is a ring plate having end surfaces on both sides in the axial direction of the tool holder 10. An outer peripheral edge of the covering member 41 juts radially outward more than the axial forward end surface 125. A plurality of through holes 414 are formed in the covering member 41 with a predetermined space therebetween along the circumference direction. Bolts 44 are inserted into the through holes 414 from the axial forward end side and the bolts 44 are screwed with their end points into bolt holes 127 (FIGS. 1 and 3) formed in the axial forward end surface 125, thereby fixedly attaching the covering member 41 to the axial forward end of the tool attachment portion 12.

As shown in Fig. 2, injection ports 415 in the shape of a triangular groove are formed at the inner peripheral edge of the covering member 41 so as to extend from the forward end surface to the rearward end surface of the covering member 41. The injection ports 415 of the covering member 41 that is secured to the axial forward end of the tool attachment portion 12 align with axial forward ends of the linear grooves 126 as shown in Fig. 4. When a shank Ts of the tool T1 is inserted into the tool-holding bore 122 and the shank Ts of circular cross section is chucked in the tool attachment portion 12, the linear grooves 126 and injection ports 415 establish continuous liquid passages. The cutting liquid flowing along the linear grooves 126 is injected from the injection ports 415 toward the forward end of the tool T1 and reaches a workpiece (not shown). Thus, the linear grooves 126 function as cutting liquid passages. In addition, the linear grooves 126 facilitate elastic deformation of the tool attachment portion 12 in the direction in which the tool attachment portion contracts radially. Fig. 3 shows several linear grooves 126 as an embodiment; however, still more linear grooves can be provided.

The tool holder 10 employs a side-lock type chuck structure 21 and a roll-lock type chuck structure 31 for the tool attachment portion 12 to chuck the shank Ts of the tool T1, such as an endmill and reamer.

First, the side-lock type chuck structure 21 will be described. The tool attachment portion 12 has an outer peripheral surface 12a at a small-diameter forward end part thereof and an outer peripheral surface 12b at a large-diameter rearward end part thereof. Between the outer peripheral surface 12a on the forward end side and the outer peripheral surface 12b on the rearward end side, an annular step surface 12c is formed. A through hole 22 is formed on the rear side of the tool attachment portion 12. The through hole 22 penetrates the tool attachment portion 12 from the outer peripheral surface 12b on the rear end side to the inner peripheral surface 12h of the tool attachment portion 12 and connects with the tool-holding bore 122. The through hole 22 also extends roughly in a radial direction of the tool attachment portion 12 and slightly inclines, as shown in Fig. 1, so that an opening of the through hole 22 on the outer peripheral surface of the tool attachment portion 12 is located axially more forward than an opening of the through hole 22 on the inner peripheral surface of the tool attachment portion 12. On an extension of an axis of the through hole 22, the aforementioned circumferential groove 124 is formed.

An internal thread 22s is formed in a part, near the tool-holding bore 122, of the through hole 22. Of the through hole 22, an outer part 22m, which is away from the tool-holding bore 122, has a diameter larger than the internal thread 22s. A side-lock bolt 23 is screwed into the through hole 22 from the outer peripheral surface side.

The side-lock bolt 23 has a large-diameter head 23m at its rearward end in the longitudinal direction and a small-diameter external thread 23s at its middle region in the longitudinal direction. At the forward end of the side-lock bolt 23 in the longitudinal direction formed is a forward end surface 23t that has a smaller diameter than the external thread 23s and is positioned at a plane orthogonal to the longitudinal direction of the side-lock bolt 23. The head 23m is accommodated within the outer part 22m, while the external thread 23s is threadedly engaged with the internal thread 22s. The forward end of the side-lock bolt 23 sticks out of the through hole 22 to enter the tool-holding bore 122.

An annular groove is formed on the outer periphery of the head 23m of the side-lock bolt 23 to receive an O ring 24 which is an annular seal member. The O ring 24 is in contact with the outer part 22m along the whole circumference of the through hole 22. Accordingly, the O ring 24 seals an annular gap between the through hole 22 and side-lock bolt 23.

On the outer peripheral surface 12b on the rearward end side of the tool attachment portion 12, a recessed portion 25 is provided at a different position from the through hole 22 in a circumferential direction. The recessed portion 25 is provided to prevent the through hole 22 from causing eccentricity of the center of mass of the holder body 11 with respect to the axis O. In the simple embodiment shown in Fig. 1, the recessed portion 25 is formed at a position 180° different from the through hole 22 in the circumferential direction. The recessed portion 25 allows the center of mass of the holder body 11 to align to the axis O and therefore keeps the mass around the axis O in balance. In another embodiment, a mass control portion, such as a recessed portion or a mass body, is formed at any position, but not at the position 180° different from the through hole 22 in the circumferential direction.

The recessed portion 25 may be provided to the holder body 11 after the shank Ts of the tool T1 having inserted in the tool-holding bore 122 is secured with the side-lock bolt 23 in order to balance the mass of the holder body 11 and side-lock bolt 23 around the axis. This allows the center of mass of the assembly including the side-lock bolt 23, which is rotated in the tightening direction until the shank Ts of the tool T1 is secured, and the holder body 11 with the through hole 22 formed therein to approximate and to align to the axis O. It is therefore possible to align the forward end of tool T1 with a rotational axis to machine a workpiece with high precision.

Next, the roll-lock type chuck structure 31 will be described. The tool attachment portion 12 has an outer peripheral surface 12a at a forward end part, which is circular in cross section, centered around the axis O and tapers toward the axial forward end (e.g., tapering to 1/32). The outer peripheral surface 12a is encompassed by the clamp member 32.

The clamp member 32 is configured to contract the tool attachment portion 12 to tightly chuck the shank Ts of the tool T1, and has an inner peripheral surface 32a that tapers at the same angle as that at which the outer peripheral surface 12a on the forward end side of the tool attachment portion tapers (e.g., tapered to 1/32) and faces the outer peripheral surface 12a on the forward end side. In addition, a detachment prevention ring 36 is attached in a rear end part of the inner peripheral surface of the clamp member 32. With movement of the clamp member 32 toward the axial forward end, the inner peripheral edge of the detachment prevention ring 36 abuts against an engage portion formed in the outer peripheral surface 12a on the forward end side of the tool attachment portion 12 to restrict the movement of the clamp member 32 to the axial forward end. Accordingly, the clamp member 32 is prevented from being detached from the tool attachment portion 12.

In an annular space 33 defined between the inner peripheral surface 32a of the clamp member 32 and the outer peripheral surface 12a on the forward end side of the tool attachment portion 12, a plurality of needle rollers 34 and a retainer 35 for aligning the needle rollers 34 are disposed. The retainer 35 is a tubular cylinder tapering at the same angle as that at which the outer peripheral surface 12a on the forward end side tapers and is freely fit to the outer peripheral surface 12a on the forward end side of the tool attachment portion 12.

The thickness of the retainer 35 is smaller than the space between the inner peripheral surface 32a and outer peripheral surface 12a on the forward end side of the tool attachment portion 12, or the diameter of the needle rollers 34. The retainer 35 has a plurality of pockets for holding one or more needle rollers 34 at a predetermined interval in the circumferential direction and at a predetermined interval in the axial direction. The pockets are long holes passing through the retainer 35 in radial directions. The rolling faces of the needle rollers 34 project from the pockets radially inward of the retainer 35 to make contact with the outer peripheral surface 12a on the forward end side of the tool attachment portion 12, while projecting from the pockets radially outward of the retainer 35 to make contact with the inner peripheral surface 32a.

The pockets of the retainer 35 are formed to be inclined at a predetermined angle in the circumferential direction with respect to the center axis. This inclination of the pockets also inclines the needle rollers 34 held by the pockets at the predetermined angle with respect to the axis O in the circumferential direction and rolls the needle rollers 34 in a spiral on the outer peripheral surface 12a on the forward end side of the tool attachment portion 12.

The clamp member 32 is made of metal and has an axial forward end that sticks out beyond the axial forward end surface 125 of the tool attachment portion 12 toward the axial forward end and faces the outer peripheral edge of the covering member 41. The covering member 41 is configured to have an outer diameter greater than that of the axial forward end surface 125 to cover the axial forward end opening of the annular space 33 between the clamp member 32 and tool attachment portion 12. The outer peripheral edge of the covering member 41 restricts the movement of the retainer 35 toward the axial forward end and prevents the retainer 35 from been removed from the tool attachment portion 12. An O ring 42, which is an annular outer seal member, is attached to the outer peripheral edge of the covering member 41 to seal between the covering member 41 and clamp member 32, thereby preventing entry of foreign matter into the annular space 33.

The axial rearward end of the clamp member 32 is shaped into an annular flat surface 32c perpendicular to the axis O and facing the annular step surface 12c of the holder body 11. The clamp member 32 can move forward in the axial direction with respect to the annular step surface 12c, but the annular step surface 12c restricts the rearward movement in the axial direction of the clamp member 32 over the annular step surface 12c. An annular groove is formed on the annular flat surface 32c to receive an O ring 37 serving as an annular seal member.

On a radially inner side of the annular step surface 12c, an annular groove 12d is formed with the axis O at the center. The inner diameter of the annular groove 12d is the same in size as the outer diameter of the rearward end side of the tool attachment portion 12 where the outer peripheral surface 12a is formed. The inner peripheral surface of the annular groove 12d is contiguous to the outer peripheral surface 12a to increase the size of the forward end side outer peripheral surface 12a in the axial direction. Therefore, the effective grip length L1 of the roll-lock type chuck structure 31 can be elongated without making the holder body 11 longer.

Chucking operation of the tool T1 starts with inserting the shank Ts of the tool T1 into the tool-holding bore 122. Then, the roll-lock type chuck structure 31 is operated to hold the shank Ts with high precision and the side-lock type chuck structure 21 is operated to lock the shank Ts to prevent rotation. According to the present embodiment, the shank Ts of the tool T1 can be highly-precisely held in the tool attachment portion 12 by turning the clamp member 32 to contract the tool-holding bore 122 in order to chuck the shank Ts of the tool T1 in the former operation. In the latter operation, the side-lock bolt 23 is tightened so that the shank Ts of the tool T1, which was once precisely held to align to the axis O, does not deviate from the axis O and does not rotate. Note that reversing the former and latter operations results in the tool's shank in the tool attachment portion being held imprecisely.

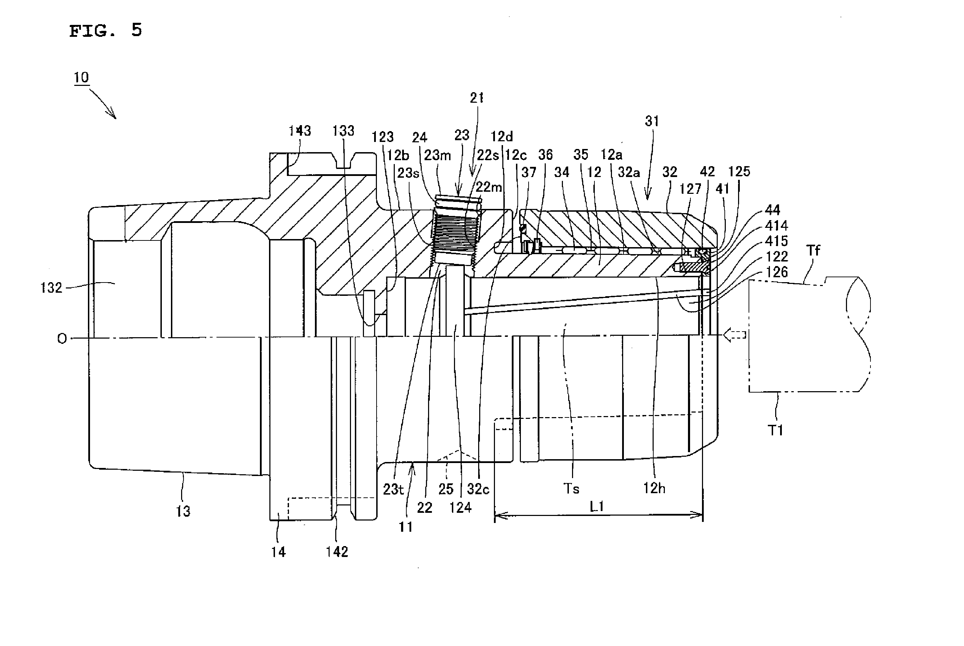

More detail of the chucking operations will be described. As shown in Fig. 5, the side-lock bolt 23 is turned in the loosening direction in advance to retract the forward end of the side-lock bolt 23 from the tool-holding bore 122. The clamp member 32 is turned in the loosening direction to expand the tool attachment portion 12 outward in the radial direction and make the diameter of the tool-holding bore 122 large. Then, a shank Ts of a tool, such as a cutter, is inserted into the tool-holding bore 122 from the axial forward end side. The shank Ts has an abutment flat surface Tf formed by cutting a part of the outer surface, and the abutment flat surface Tf is mated with the through hole 22.

Turning the clamp member 32 in the tightening direction rotates the needle roller 34 in contact with the inner peripheral surface 32a of the clamp member 32 and revolves on the outer peripheral surface 12a on the forward end side of the tool attachment portion 12 in a spiral. With gradual movement of the clamp member 32 with the retainer 35 toward the axial rearward end, the outer peripheral surface 12a is heavily pressed in the inner radius direction across the entire circumference to contract in diameter by the wedge action of the inner peripheral surface 32a and outer peripheral surface 12a, both of which are tapered. Consequently, the tool-holding bore 122 formed at the center of the tool attachment portion 12 also contracts in diameter, and the entire circumference of the cylindrical portion in a forward area of the shank Ts in the tool-holding bore 122 is evenly clamped by the inner peripheral surface 12h along the effective grip length L1 of the outer peripheral surface 12a and held along the axis O with high precision.

When chucking the shank Ts by turning the clamp member 32 in the tightening direction, the annular flat surface 32c at the axial rearward end of the clamp member 32 abuts against the annular step surface 12c of the holder body 11, and the O ring 37 is sandwiched between the axial rearward edge of the clamp member 32 and the annular step surface 12c of the holder body 11. This can seal the opening at the axial rearward end of the annular space 33 between the clamp member 32 and tool attachment portion 12, thereby preventing entry of foreign matter into the annular space 33.

Then, the side-lock bolt 23 is turned in the tightening direction until the forward end surface 23t of side-lock bolt 23 screwed in the through hole 22 abuts against the abutment flat surface Tf. The forward end surface 23t of the side-lock bolt 23 pushes with a great force against the abutment flat surface Tf at a rear portion of the shank Ts to secure the shank Ts to the tool-holding bore 122. Because the circumferential groove 124 is formed at the same axial position as the through hole 22, the cutting liquid flowing from the center bore 132 toward the axial forward end enters the circumferential groove 124 from a position further rearward in the axial direction than the cylindrical portion formed at the forward part of the shank Ts.

As described above, the shank Ts is at first held using the roll-lock type chuck structure 31 and then locked from rotating using the side-lock type chuck structure 21, thereby chucking the shank Ts by the tool attachment portion 12 as shown in Fig. 1. The tool T1 is detached by following the aforementioned steps in reverse.

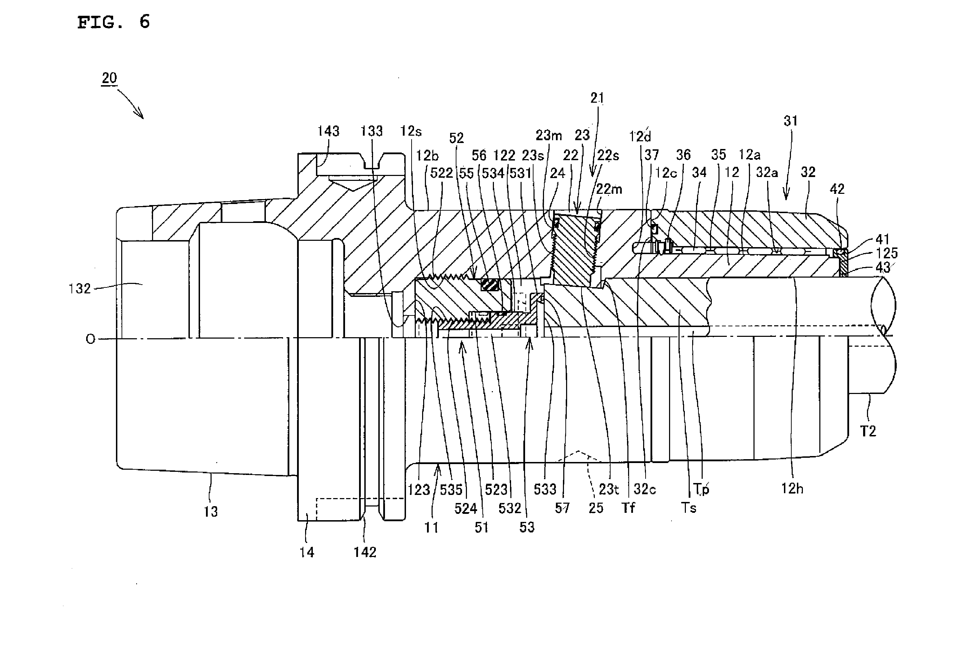

Another embodiment of the present invention will be described. Fig. 6 is a longitudinal cross-sectional view of the embodiment of the present invention. Through the embodiment, components in common with those in the previous embodiment will be denoted by identical numerals and they will not be reiterated, but components unique to this embodiment will be described below. A tool holder 20 of the embodiment further includes an O ring 43 serving as an annular inner seal member for sealing a space between the inner peripheral edge of the covering member 41 and the outer peripheral surface of the shank Ts of a tool T2 inserted in the tool-holding bore 122. In the shank Ts chucked by the tool holder 20, formed is a liquid passage Tp extending from a rear end of the tool T2 toward the front end in the axial direction, through which cutting liquid is supplied from the small center bore 133 via the tool-holding bore 122 to the rear end of the liquid passage Tp. The cutting liquid flowing through the liquid passage Tp is ejected from the tip (not shown) of the tool T2 and reaches a workpiece. According to Fig. 6, the O ring 43 in the annular shape provided to seal the gap between the inner peripheral edge of the covering member 41 and the outer peripheral surface of the shank Ts can prevent the cutting liquid flowing from the small center bore 133 to the tool-holding bore 122 from leaking from the forward end of the tool attachment portion 12. Especially, the O ring 43 is effective in the case where the linear grooves 126 are formed on the inner peripheral surface 12h of the tool holder 20.

A tool holder 20 of yet another embodiment further includes a stopper 51 provided at the bottom of the tool-holding bore 122 and defining the axial position of the shank Ts of a tool T2 inserted in the tool-holding bore 122.

The stopper 51 includes a stationary member 52 affixed to the inner peripheral surface 12h of the tool attachment portion 12 and an adjusting member 53 supported by the stationary member 52 so as to move in the axial direction and abutting against the shank Ts of the tool T2. Formed on the outer peripheral surface of the stationary member 52 is external thread 522 that engages with an internal thread 12s, which is formed on the inner peripheral surface 12h of the tool attachment portion 12, near the bottom of the tool-holding bore 122, thereby fixedly attaching the stationary member 52 to the tool-holding bore 122. In addition, an annular groove is formed on the outer peripheral surface of the stationary member 52, further forward than the external thread 522, to receive an O ring 55 which is an annular seal member. The O ring 55 is a first seal member for sealing between the tool-holding bore 122 and stationary member 52.

Furthermore, the stationary member 52 has a center bore 523 passing therethrough in the axial direction. The adjusting member 53 is fixedly attached to the center bore 523. The center bore 523 has a rear end part having a smaller diameter than its front end part, and an internal thread portion 524 is formed at the rear end part.

The adjusting member 53 is made of three cylinders connected in series, a front portion 531 having a large diameter, a middle portion 534 having a diameter smaller than that of the front portion 531, and a rear portion 535 having a diameter smaller than that of the middle portion 534. A communication passage 532 is formed so as to penetrate the center of the adjusting member 53 in the axial direction. A rear end opening of the communication passage 532 is connected to the small center bore 133, while a front end opening of the communication passage 532 is connected to the rear end opening of the liquid passage Tp of the shank Ts.

The adjusting member 53 has a large-diameter front end surface 533 formed on the large-diameter front portion 531. The large-diameter front end surface 533 abuts against the tool T2 in the tool-holding bore 122 so as to make surface contact with a rear end of the shank Ts of the tool T2 and defines the axial position of the shank Ts. A ring groove is formed on the large-diameter front end surface 533 with the axis O at center to receive an annular O ring 57. The O ring 57 is a third seal member that makes contact with the shank Ts without gaps therebetween to seal between the large-diameter front end surface 533 and shank Ts. This configuration forms a sealed connection between the front end opening of the communication passage 532 formed in the center of the large-diameter front end surface 533 and the rear end opening of the liquid passage Tp formed in the center of the rear end surface of the shank Ts.

An external thread portion is formed on the outer peripheral surface of the rear portion 535 of the adjusting member 53 to threadedly engage with the internal thread portion 524 of the stationary member 52. Turning the adjusting member 53 engaged with the internal thread portion 524 can adjust the axial position of the adjusting member 53 as indicated by dashed lines in Fig. 6.

The middle portion 534 of the adjusting member 53 is received by the front portion of the center bore 523 of the stationary member 52. An annular groove is formed on the outer peripheral surface of the middle portion 534 of the adjusting member 53 to receive an O ring 56 which is an annular seal member. The O ring 56 is a second seal member for sealing between the inner peripheral surface of the stationary member 52 and the outer peripheral surface of the adjusting member 53.

According to the embodiment shown in Fig. 6, the center bore 132 and small center bore 133, which are liquid passages for cutting liquid flow, extend from the mounting portion 13 of the holder body 11 to the bottom 123 of the tool-holding bore 122. The adjusting member 53 is fixedly attached in the center bore 523 penetrating through the stationary member 52 in the axial direction and includes the communication passage 532 connecting the bottom 123 of the tool-holding bore 122 and the opening of the tool-holding bore 122 and an annular O ring 57 for sealing between the large-diameter front end surface 533, which is an axial forward end surface, and the rearward end surface of the shank Ts of the tool T2. This configuration can establish a reliable connection from the small center bore 133 of the holder body 11 to the liquid passage Tp of the tool T2 via the communication passage 532.

The annular O ring 55, which is formed in the stationary member 52 to seal between the stationary member 52 and the tool-holding bore 122, and the annular O ring 56, which is formed in the adjusting member 53 to seal between the wall surface of the center bore 523 and the adjusting member 53, can prevent the cutting liquid from leaking toward the through hole 22.

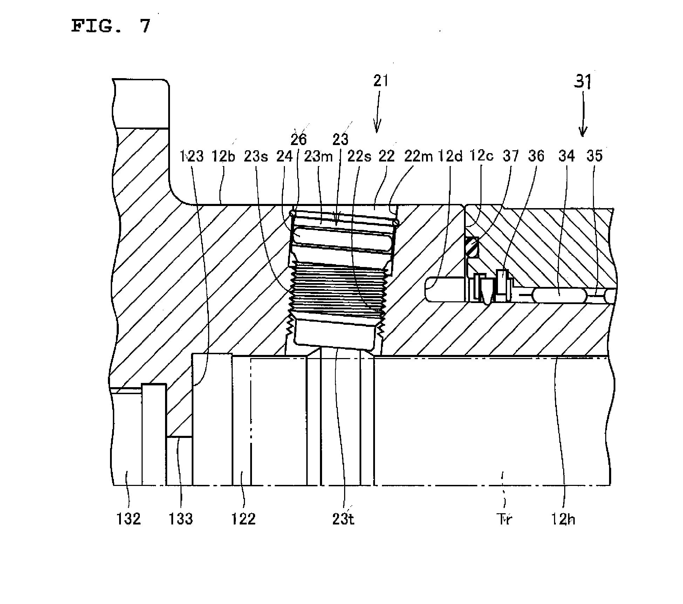

With reference to the longitudinal cross-sectional view in Fig. 7, a modification of the side-lock type chuck structure will be described. In the modification, an annular groove is formed on an outer part 22m of the through hole 22 and a snap ring 26 is fixedly attached in the annular groove. The snap ring 26, which is in a C shape and positioned nearer the outer peripheral surface of the tool attachment portion 12 than is the side-lock bolt 23, is a detachment prevention member to prevent the side-lock bolt 23 from falling out of the through hole 22 outward (outer periphery side). Even if the side-lock bolt 23 is loosened due to high-speed rotating operation of the tool holder 10, this configuration can prevent the side-lock bolt 23 from falling off.

Fig. 7 shows the side-lock bolt 23 with the head 23m abutting against the snap ring 26 after the side-lock bolt 23 is turned in the loosening direction. Moving the side-lock bolt 23 radially outward retracts the forward end surface 23t of the side-lock bolt 23 from the tool-holding bore 122. According to the modification, a cylindrical shank Tr can be inserted even if the shank does not have an abutment flat surface to be formed by cutting a portion away from the shank Tr. The shank Tr also can be held by the roll-lock type chuck structure 31.

The foregoing has described the embodiment of the present invention by referring to the drawings. However, the invention should not be limited to the illustrated embodiment. It should be appreciated that various modifications and changes can be made to the illustrated embodiment within the scope of the appended claims and their equivalents.

The tool holder according to the present invention is advantageously utilized in machine tools.

### List of reference signs

- 10: holder
- 11: holder body
- 12: tool attachment portion
- 12a: outer peripheral surface
- 12b: outer peripheral surface
- 12c: annular step surface
- 12d: annular groove
- 12h: inner peripheral surface
- 12s: internal thread
- 13: mounting portion
- 14: flange portion
- 20: tool holder
- 21: side-lock type chuck structure
- 22: through hole
- 22m: outer part
- 22s: internal thread
- 23: side-lock bolt
- 23m: head
- 23s: external thread
- 23t: forward end surface
- 24: seal member
- 25: recessed portion
- 26: detachment prevention member
- 31: roll-lock type chuck structure
- 32: clamp member
- 32a: inner peripheral surface
- 32c: annular flat surface
- 33: annular space
- 34: needle rollers
- 35: retainer
- 36: detachment prevention ring
- 37: annular seal member
- 41: covering member
- 42: outer seal member
- 43: inner seal member
- 44: bolts
- 51: stopper member
- 52: stationary member
- 53: adjusting member
- 55: annular seal member
- 56: annular seal member
- 57: annular seal member
- 122: tool-holding bore
- 123: bottom
- 124: circumferential groove
- 125: axial forward end surface
- 126: linear groove
- 127: bolt holes
- 132: center bore
- 133: center bore
- 142: V-shaped groove
- 143: drive-key groove
- 414: through holes
- 415: injection port
- 522: external thread
- 523: bore
- 524: internal thread portion
- 531: front portion
- 532: communication passage

- 533: large-diameter front end surface
- 534: middle portion
- 535: rear portion

- L1: effective grip length

- T1: tool
- T2: tool

- Tf: abutment flat surface
- Tp: liquid passage
- Tr: shank
- Ts: shank

## Claims

1. A tool holder (10) comprising:
a holder body (11) including a cylindrical tool attachment portion (12) that has at its center a tool-holding bore (122) extending from an axial forward end toward an axial rearward end and is formed in an axial forward end area of the holder body (11), a mounting portion (13) that is provided in an axial rearward end area of the holder body (11) and formed in a shape to fit to a center-through-coolant spindle of a machine tool, and a liquid passage (132, 133) that connects the mounting portion (13) and the tool-holding bore (122) to supply liquid flowing from the center-through-coolant spindle to the tool-holding bore (122);
a side-lock bolt (23) that is inserted into a through hole (22) passing through from an outer peripheral surface (12b) to an inner peripheral surface (12h) of the tool attachment portion (12), engages with an internal thread (22s) formed in the through hole (22), and secures a shank of a tool inserted into the tool-holding bore; and
an annular seal member (24) that seals between the through hole (22) and the side-lock bolt (23).

2. The tool holder (10) according to claim 1, further comprising a detachment prevention member (26) that is provided in the through hole (22) to prevent the side-lock bolt (23) from falling out of the through hole (22).

3. The tool holder (10) according to claim 2, wherein when the side-lock bolt (23) is moved to a position to abut against the detachment prevention member (26), retraction of the side-lock bolt (23) from the tool-holding bore (122) is completed.

4. The tool holder (10) according to any one of claim 1 to 3, wherein a mass control portion (25) that keeps mass around an axis (O) of the holder body (11) and side-lock bolt (23) in balance is provided to the holder body (11) with the shank of the tool in the tool-holding bore (122) secured with the side-lock bolt (23).

5. The tool holder (10) according to any one of claim 1 to 4, wherein
the outer peripheral surface (12a) of the tool attachment portion (12) is tapered toward the axial forward end,
the tool holder further comprises:
a cylindrical clamp member (32) that has an inner peripheral surface (32a) tapered at the same angle as the outer peripheral surface (12a) of the tool attachment portion (12) and
encompasses the outer peripheral surface (12a) of the tool attachment portion (12) on the axial forward end side that is further forward than the side-lock bolt (23);
a plurality of needle rollers (34) disposed in an annular space (33) between the inner peripheral surface (32a) of the clamp member (32) and the outer peripheral surface (12a) of the tool attachment portion (12); and
a retainer (35) that holds the needle rollers (34) so that the needle rollers (34) incline at a predetermined angle in a circumferential direction with respect to the axis (O), and
the clamp member (32) is rotated to rotate the needle rollers (34) and revolve the needle rollers (34) in a spiral to contract the diameter of the tool-holding bore (122) formed in the tool attachment portion (12) or expand the tool-holding bore (122) to its original diameter.

6. The tool holder (10) according to claim 5, wherein
the holder body (11) includes, on an outer peripheral surface thereof, an annular step surface (12c) that faces an axial rearward end surface of the clamp member (32) and restricts the axial rearward movement of the clamp member (32), and
the tool holder further comprises an annular seal member (37) interposed between the axial rearward end surface of the clamp member (32) and the annular step surface (12c) of the holder body (11).

7. The tool holder (10) according to claim 5 or 6, further comprising:
an annular covering member (41) that is attached to the axial forward end of the tool attachment portion (12) to cover an axial forward end opening of the annular space (33); and
an annular outer seal member (42) that seals between the covering member (41) and the clamp member (32).

8. The tool holder (10) according to claim 7, wherein
a linear groove (126) is formed on the inner peripheral surface (12h) of the tool attachment portion (12) from an axial forward end surface toward an axial rearward end of the tool attachment portion (12), and
an injection port (415) is formed at an inner peripheral edge of the covering member (41), the injection port (415) extending from a forward end surface to a rearward end surface of the covering member (41) to connect with the linear groove (126).

9. The tool holder (20) according to claim 7, further comprising an annular inner seal member (43) that seals between the inner peripheral edge of the covering member (41) and the outer peripheral surface of the shank of the tool inserted in the tool-holding bore.

10. The tool holder (20) according to any one of claim 1 to 9, further comprising a stopper member (51) that is fixedly attached to the bottom of the tool-holding bore (122) to define the axial position of the shank of the tool inserted in the tool-holding bore (122).

11. The tool holder (20) according to claim 10, wherein
the stopper member (51) includes a stationary member (52) fixedly attached to the inner peripheral surface of the tool attachment portion (12) and an adjusting member (53) movably supported in the axial direction by the stationary member (52) and abutting against the shank of the tool.

12. The tool holder (20) according to claim 11, wherein
the liquid passage (532) extends from the mounting portion (13) of the holder body (11) to the bottom of the tool-holding bore (122),
the stationary member (52) includes a first annular seal member (55) that seals between an outer peripheral surface of the stationary member (52) and the inner peripheral surface of the tool attachment portion (12), and
the adjusting member (53) is fixedly attached to a bore (523) passing through the stationary member (52) in the axial direction and includes a second annular seal member (56) that seals between a circumference wall of the bore in the stationary member (52) and the adjusting member (53), a communication passage (532) connecting the bottom (123) of the tool-holding bore (122) and an opening of the tool-holding bore (122), and a third annular seal member (57) that seals between an axial forward end surface of the adjusting member (53) abutting against the shank of the tool and the shank of the tool.
